# EUROPÄISCHE PATENTSCHRIFT

(11) **EP 3 265 704 B1**
(45) Veröffentlichungstag und Bekanntmachung des Hinweises auf die Patenterteilung: **07.08.2019**
(21) Anmeldenummer: 16707642.1
(22) Anmeldetag: 08.02.2016
(51) Int. Cl.: F16K 3/02, F16K 35/04

(54) **VENTILOBERTEIL FÜR ARMATUREN**
VALVE BONNET FOR FITTINGS
PIÈCE SUPÉRIEURE DE SOUPAPE POUR ROBINETTERIE

(30) Priorität: 03.03.2015 DE 202015101019 U
(43) Veröffentlichungstag der Anmeldung: 10.01.2018
(73) Patentinhaber: Flühs Drehtechnik GmbH, 58515 Lüdenscheid (DE)
(72) Erfinder: THURAU, Friedrich, 58849 Herscheid (DE)
(74) Vertreter: Patentanwälte Dörner & Kötter PartG mbB
(86) Internationale Anmeldenummer: PCT/EP2016/052602
(87) Internationale Veröffentlichungsnummer: WO 2016/139029

(56) Entgegenhaltungen:
- EP-A1- 1 180 223
- WO-A1-93/02309
- US-A- 5 069 249
- US-A1- 2011 000 564

## Beschreibung

Die Erfindung betrifft ein Ventiloberteil mit einem Kopfstück, in dem eine Spindel angeordnet ist, die auf einer Scheibenführung aufliegt und über einen Zapfen mit einer in der Scheibenführung geführten Steuerscheibe im Eingriff steht, die mit einer drehfesten Durchlassscheibe in Berührung steht, die mindestens eine Durchtrittsöffnung aufweist, wobei die Spindel einen kugelförmigen Abschnitt aufweist, an dem der Zapfen angeordnet ist.

Mit Hilfe von Ventiloberteilen wird der Austritt von Medien aus Armaturen gesteuert. Für diesen Zweck wird das Ventiloberteil mittels seines Kopfstücks in das Gehäuse einer Armatur positioniert; auf seine drehbare Spindel wird ein Drehgriff oder Hebel gesteckt. Bei bekannten Ventiloberteilen mit drehbarer Spindel (vgl. DE 32 07 895 C2, DE 36 38 180 C2, DE 87 15 044 U1) sind jeweils zwei Scheiben zur Steuerung des Durchflusses vorgesehen. Die Scheiben sind aus keramischem Material hergestellt. Eine der beiden Scheiben - Steuerscheibe - ist mit Hilfe eines mit der Spindel in Verbindung stehenden Mitnehmers drehbar in dem Ventiloberteil angeordnet. Die andere Scheibe - Durchlassscheibe - ist eine feste Ventilsitzscheibe, auch als Festscheibe bezeichnet. Bei Drehung der Steuerscheibe gleiten die Scheiben aneinander. Auf der dem Ventilsitz der Armatur zugewandten Seite ist eine Dichtung angeordnet, die an der Durchlassscheibe anliegt. Die Dichtung überragt die Stirnfläche des Ventiloberteils. Sie dient zur Abdichtung sowohl zur Durchlassscheibe als auch zum Ventilsitz der Armatur.

Ein weiteres Ventiloberteil wird aus der US 2011/000564 A1 bekannt.

Auch bei Einhebel-Mischventilen finden zur Steuerung des Durchflusses Keramik-Scheiben Anwendung (vgl. WO 93/02309). Bei diesen Ventilen ist eine dreh- und schwenkbar gelagerte Spindel vorgesehen, mit deren Hilfe die Steuerung des Durchflusses erfolgt. Die Spindel weist eine Kugel auf, mit deren Hilfe die Spindel in dem Kopfstück schwenkbar ist. Unmittelbar im Anschluss weist die Spindel einen weiteren kugelförmigen Teil auf, mit dem die Spindel in einen mit der Steuerscheibe in Verbindung stehenden Mitnehmer greift. In der EP 1 462 692 B1 ist ein derartiges Ventiloberteil beschrieben, bei dem keine Anschläge in Rotationsrichtung vorhanden sind, wodurch ein Überdrehen der Spindel ausgeschlossen ist. Dieses Ventiloberteil, bei dem Materialermüdungen durch häufige Stöße auf angeordnete Anschlagprofile ausgeschlossen sind, hat sich in der Praxis seit langem bewährt. Bei manchen Anwendungen wird jedoch eine automatische Schließung des Ventils benötigt, wobei das Ventil zudem nur geringen Bauraum beanspruchen soll.

Hier will die Erfindung Abhilfe schaffen. Der Erfindung liegt die Aufgabe zugrunde, ein Ventiloberteil der vorgenannten Art bereitzustellen, das eine automatische Schließung ermöglicht und das darüber hinaus bauraumoptimiert herstellbar ist. Gemäß der Erfindung wird diese Aufgabe dadurch gelöst, dass die Spindel über wenigstens ein Federelement in Schließrichtung der Steuerscheibe vorgespannt ist.

Mit der Erfindung ist ein Ventiloberteil der vorgenannten Art bereitgestellt, das eine automatische Schließung ermöglicht und das darüber hinaus bauraumoptimiert herstellbar ist. Dadurch, dass die Spindel über wenigstens ein Federelement in Schließrichtung der Steuerscheibe vorgespannt ist, gleitet diese nach einer Betätigung automatisch in die ursprüngliche Schließstellung zurück.

In Weiterbildung der Erfindung umfasst das wenigstens eine Federelement eine Schenkelfeder, die bevorzugt als Doppelschenkelfeder ausgebildet ist. Doppelschenkelfedern weisen den Vorteil auf, dass sie durch den mittigen Bügel eine linear gerichtete Krafteinleitung ermöglichen.

In vorteilhafter Ausbildung der Erfindung ist eine solche Doppelschenkelfeder angeordnet, wobei an der Spindel eine eine ebene Fläche aufweisende Einbuchtung angeordnet ist, an welcher Fläche der Mittelbügel der Doppelschenkelfeder anliegt. Hierdurch ist ein geführtes Gleiten des Mittelbügels während eines Verschwenkens der Spindel entlang der ebenen Fläche erzielt.

In Ausgestaltung der Erfindung ist in die Spindel in Höhe des der Spindel zugewandten Endes des Kopfstücks eine keilförmige, eine in Richtung des freien Endes der Spindel in Richtung deren Mittelachse geneigte ebene Fläche aufweisende Ausnehmung eingebracht. Hierdurch ist der maximale Schwenkwinkel der Spindel bei minimalem Bauraum des Ventiloberteils vergrößert.

In weiterer Ausgestaltung der Erfindung ist die durch die Schwenkachse des kugelförmigen Abschnitts der Spindel verlaufende Mittelachse des Zapfens um einen spitzen Winkel geneigt zur Mittelachse der Spindel angeordnet. Dabei ist der spitze Winkel vorzugsweise derart gewählt, dass die Spindel in Schließposition der Steuerscheibe orthogonal zu dieser angestellt ist. Hierdurch ist eine optisch ansprechende Stellung der Spindel, die im eingebauten Zustand in einer Armatur üblicherweise endseitig mit einem Bedienhebel versehen ist, erzielt.

In Weiterbildung der Erfindung ist die Spindel mit ihrem kugelförmigen Abschnitt zwischen zwei beabstandet zueinander angeordneten Dichtungsringen schwimmend gelagert. Dabei sind die Dichtungsringe bevorzugt als O-Ring ausgebildet. Durch die gedämpfte Lagerung der Spindel ist eine gute Haptik des Ventiloberteils erzielt.

In Ausgestaltung der Erfindung ist beabstandet zu der Scheibenführung an einem innerhalb des Kopfstücks angeordneten Absatz anliegend ein Haltering angeordnet, der zusammen mit der Scheibenführung einen Sitz für einen der Dichtungsringe ausbildet. Hierdurch ist eine erleichterte Fertigung und Montage, auch bei Realisierung des Ventiloberteils mit geringen Abmaßen, erzielt. Die zueinander zugewandten Konturen von Scheibenführung und Haltering sind dabei mit einer Einwölbung versehen, die vorteilhaft einen Radius aufweisen, der dem Radius des aufzunehmenden O-Rings entspricht.

In weiterer Ausgestaltung der Erfindung weist die Scheibenführung Rastnasen auf, über die sie innerhalb des Kopfstücks mit diesem verrastet ist. Hierdurch ist die Montage des Ventiloberteils weiter erleichtert.

In Weiterbildung der Erfindung ist durch die Schwenkachse des kugelförmigen Abschnitts der Spindel eine Achse geführt, die derart innerhalb des Kopfstücks in zwei gegenüberliegend angeordneten Vertiefungen gelagert ist, dass eine Rotation des kugelförmigen Abschnitts um die Mittelachse der Spindel verhindert ist.

Hierdurch ist eine Beeinträchtigung der Lage des Federelements durch Rotation der Spindel vermieden. Die Vertiefung kann auch als Bohrung insbesondere als vertikale Langlochbohrung ausgebildet sein, wodurch eine Hemmung der schwimmenden Lagerung des kugelförmigen Abschnitts vermieden ist.

In Ausgestaltung der Erfindung sind die Vertiefungen jeweils durch eine vertikal verlaufende Nut gebildet. Hierdurch ist die Montage der Spindel erleichtert. Die Achse kann beim Einschieben der Spindel in das Kopfstück beidseitig in die Nuten hineingleiten und ist nach der Montage in Drehrichtung festgelegt.

In weiterer Ausgestaltung der Erfindung weist das Kopfstück an seiner der Spindel zugewandten Stirnseite ein Langloch auf, durch das die durch dieses hindurch tretende Spindel in Schwenkrichtung geführt ist.

Bevorzugt sind das Kopfstück und/oder die Spindel aus einer Messing-Silizium-Legierung hergestellt. Diese Legierung hat sich als sehr widerstandsfähig gegenüber Abrieb und Eindrückeffekten durch eine angeordnete Schenkelfeder erwiesen.

Andere Weiterbildungen und Ausgestaltungen der Erfindung sind in den übrigen Unteransprüchen angegeben. Ein Ausführungsbeispiel der Erfindung ist in der Zeichnung dargestellt und wird nachfolgend im Einzelnen beschrieben. Es zeigen:
- Figur 1: die Darstellung eines Ventiloberteils im Teilschnitt
a) im Ruhezustand;
b) im betätigten Zustand;

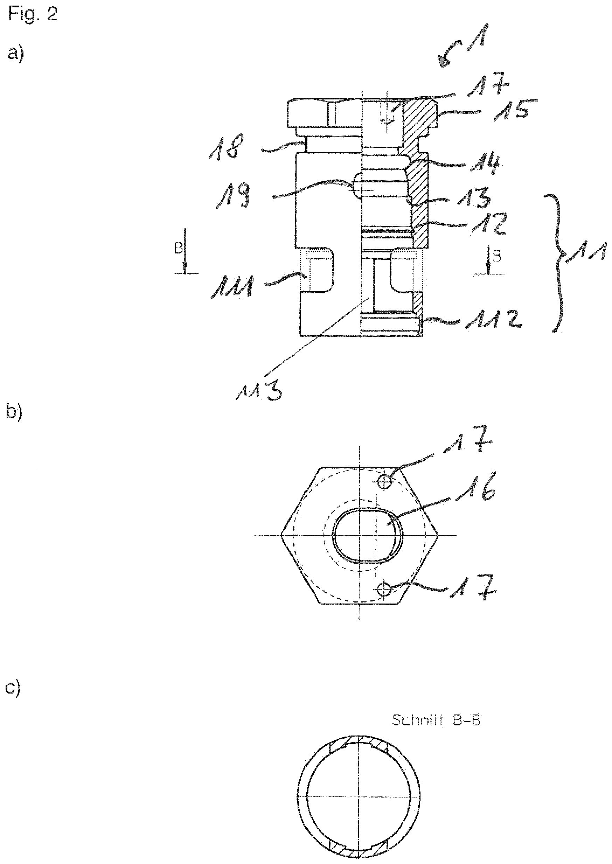

- Figur 2: die Darstellung des Kopfstücks des Ventiloberteils aus Figur 1
c) im Teilschnitt;
d) in Draufsicht;
e) im Schnitt B-B;

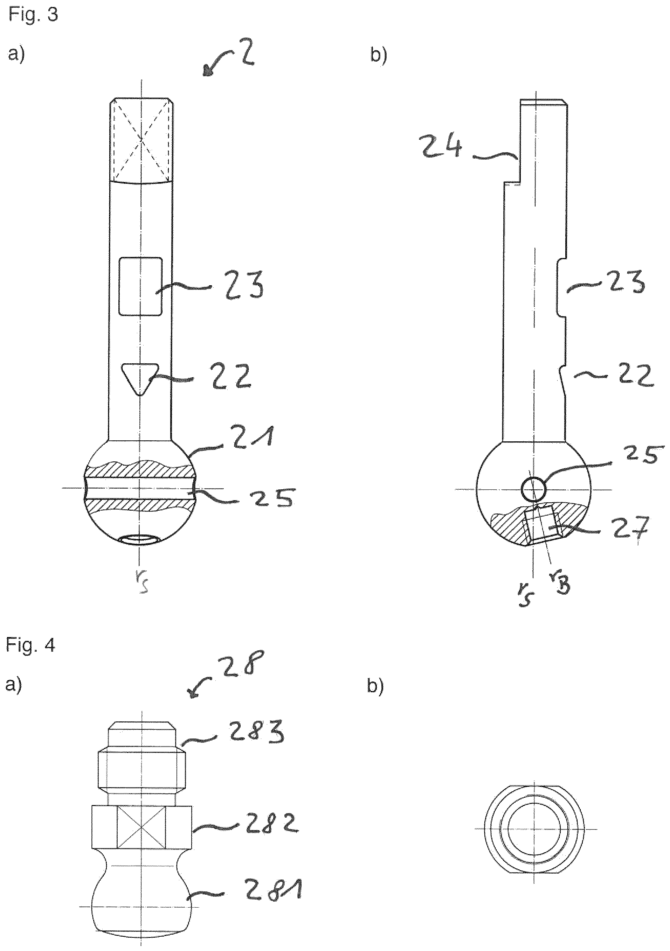

- Figur 3: die Darstellung der Spindel des Ventiloberteils aus Figur 1
a) in Seitenansicht im Teilschnitt;
b) in einer um 90 Grad gedrehten Seitenansicht im Teilschnitt;
- Figur 4: die Darstellung des Zapfens der Spindel des Ventiloberteils aus Figur 1
a) in Seitenansicht;
b) in Draufsicht;

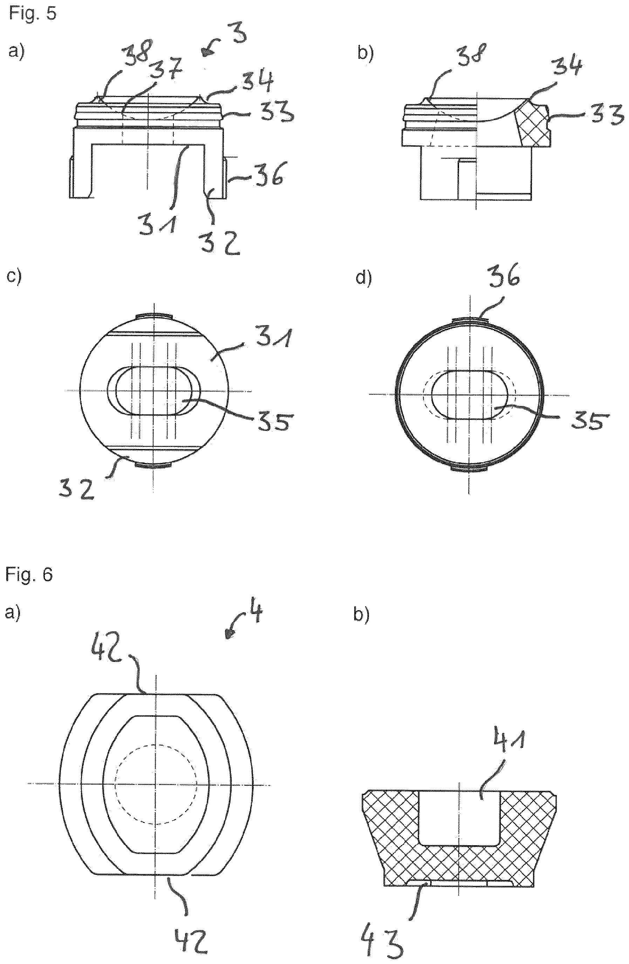

- Figur 5: die Darstellung der Scheibenführung des Ventiloberteils aus Figur 1
a) in Seitenansicht;
b) im Teilschnitt;
c) in Draufsicht;
d) in der Ansicht von unten;
- Figur 6: die Darstellung der Steuerscheibe des Ventiloberteils aus Figur 1
a) in Draufsicht;
b) im Längsschnitt;

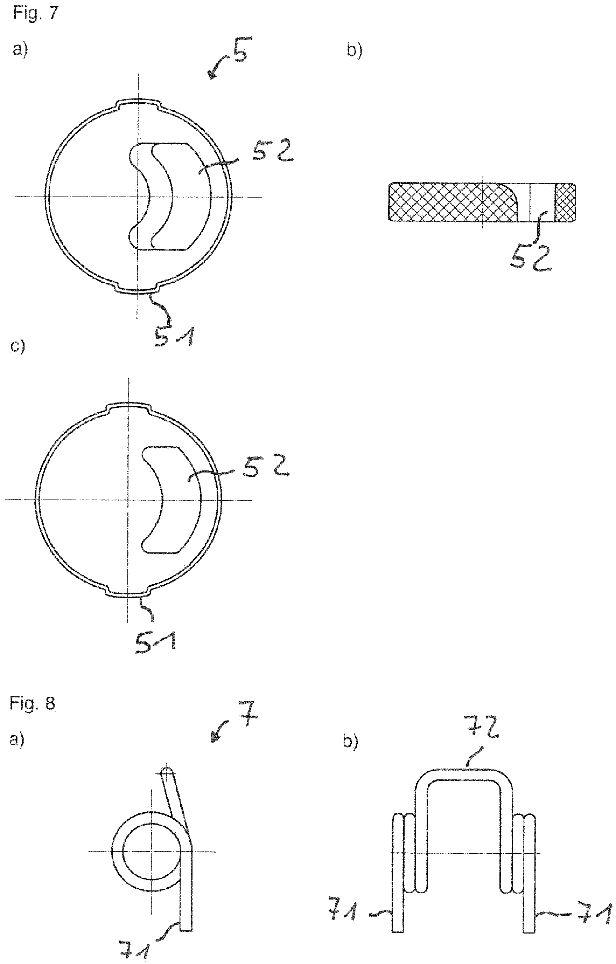

- Figur 7: die Darstellung der Durchlassscheibe des Ventiloberteils aus Figur 1
a) in Draufsicht;
b) im Längsschnitt;
c) in der Ansicht von unten;
- Figur 8: die Darstellung der Doppelschenkelfeder des Ventiloberteils aus Figur 1
a) in Seitenansicht;
b) in der Ansicht von vorne;

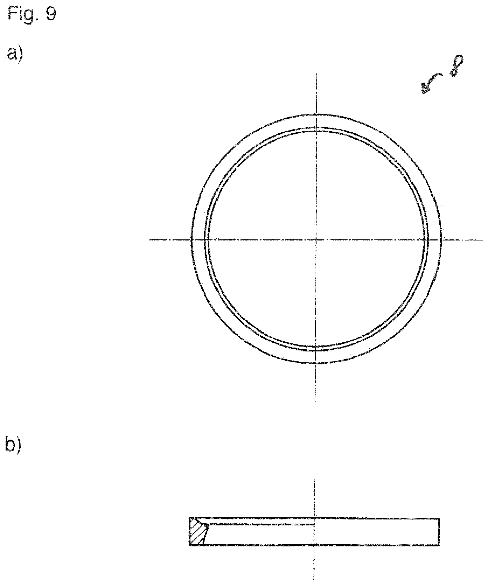

- Figur 9: die Darstellung des Halterings des Ventiloberteils aus Figur 1
a) in Draufsicht;
b) im Teilschnitt.

Das als Ausführungsbeispiel gewählte Ventiloberteil weist ein Kopfstück 1 auf, das von einer in ihm radial geführten Spindel 2 mittig durchsetzt ist. Die Spindel 2 ist über eine drehfeste Scheibenführung 3 geführt und mit einer Steuerscheibe 4 im Eingriff, welche wiederum in der Scheibenführung 3 geführt ist. Die Steuerscheibe 4 steht mit einer Durchlassscheibe 5 in Berührung, die in dem Kopfstück 1 gehalten ist und auf ihrer der Steuerscheibe 4 abgewandten Seite mit einer Dichtung 6 in Berührung steht. Zwischen Kopfstück 1 und Spindel 2 ist eine Doppelschenkelfeder 7 angeordnet, welche in Richtung der Schließposition der Spindel 2 gegen diese vorgespannt ist.

Das Kopfstück 1 besteht aus einem symmetrischen Hohlkörper, dessen beide Stirnflächen offen sind. Auf seiner der - nicht dargestellten - Armatur zugewandten Seite weist das Kopfstück 1 einen hülsenartigen Teil 11 auf, in dem diametral gegenüberliegend zwei Durchtrittsfenster 111 eingebracht sind, die von Längsstegen begrenzt sind. Innen ist in dem hülsenartigen Teil 10 endseitig eine Nut 112 zur Aufnahme der Dichtung 6 eingebracht.

Auf seiner der - nicht dargestellten - Armatur abgewandten Seite ist im Anschluss an die Fenster 111 innen eine umlaufende Rastnut 12 zur Rastverbindung der Scheibenführung 3 angeordnet. Im weiteren Verlauf der Innenkontur des Kopfstücks 1 ist der Innendurchmesser abgesetzt und mit geringerem Durchmesser fortgeführt, wodurch ein Absatz 13 gebildet ist. Der Absatz 13 dient der Anlage eines Halterings 8, der zusammen mit der Scheibenführung 3 eine Aufnahme für einen zweiten O-Ring 82 ausbildet. An den Absatz 13 schließt sich eine kugelabschnittförmige Durchmesserverjüngung an, die von einer Ringnut 14 zur Aufnahme eines ersten O-Rings 81 begrenzt ist und in einer senkrechten Bohrung mündet, die innerhalb des stirnseitigen Abschnitts 15 in eine langlochförmige Öffnung 16 übergeht. Die Mantelfläche des stirnseitigen Abschnitts ist in Form eines Außensechskants ausgebildet. In die Stirnseite des stirnseitigen Abschnitts 15 sind beidseitig der langlochförmigen Öffnung 16 gegenüberliegend zwei Sacklochbohrungen 17 zur Aufnahme der Schenkel 71 der Doppelschenkelfeder 7 eingebracht. Unterhalb des stirnseitigen Abschnitts 15 ist in das Kopfstück 1 außen eine umlaufende Nut 18 zur Aufnahme eines Dichtungsrings 83 zur Abdichtung gegenüber der - nicht dargestellten - Armatur eingebracht. Beabstandet zu der umlaufenden Nut 18 sind in das Kopfstück 1 weiterhin diametral gegenüberliegend zwei vertikale Langlochbohrungen 19 zur Aufnahme der durch die Bohrung 22 des kugelförmigen Abschnitts 21 der Spindel 2 geführten Achse 26 eingebracht.

Die Spindel 2 ist im Wesentlichen zylinderförmig ausgebildet und weist an einem Ende eine kugelförmige Anformung 21 auf, deren Rotationsachse der Rotationsachse rₛ der Spindel 2 entspricht. Beabstandet zu der kugelförmigen Anformung 21 ist in die Spindel 2 in Höhe des der Spindel 2 zugewandten Endes des Kopfstücks leine keilförmige, eine in Richtung des freien Endes der Spindel 2 in Richtung deren Rotationsachse rs geneigte ebene Fläche aufweisende erste Ausnehmung 22 eingebracht. Beabstandet zu der ersten Ausnehmung 22 ist eine Einbuchtung 23 angeordnet, die eine ebene, parallel zur Rotationsachse rₛ der Spindel verlaufende Fläche aufweist, an welcher der Bügel 72 der Doppelschenkelfeder 7 anliegt. Auf ihrer der Einbuchtung 23 gegenüber liegenden Seite ist in die Spindel 2 endseitig eine zweite Ausnehmung 24 eingebracht, die ebenfalls eine ebene, parallel zur Rotationsachse rs der Spindel 2 verlaufende Fläche aufweist, die zweite Ausnehmung 24 dient der drehfesten Befestigung eines - nicht dargestellten - Schwenkgriffs.

Orthogonal zur der Rotationsachse rs der Spindel 2 ist in die kugelförmige Anformung 21 eine Bohrung 25 zur Aufnahme einer Achse 26 eingebracht. Weiterhin ist in die kugelförmige Anformung 21 auf ihrer der Einbuchtung 23 entgegengerichteten Seite eine Gewindesackbohrung 27 zur Aufnahme eines Zapfens 28 eingebracht. Die Rotationsachse r_{B} der Gewindesackbohrung 27 ist dabei um einen Winkel von 13 Grad zur Rotationsachse rₛ der Spindel 2 geneigt angeordnet.

Der Zapfen 27 ist als rotationssymmetrisches Drehteil ausgebildet und weist einen tonnenförmigen Mitnehmerabschnitt 281 auf, der endseitig kugelabschnittsförmig ausgebildet ist. Der Mitnehmerabschnitt 281 geht über einen Radius in einen zylindrischen Abschnitt 282 über der auf zwei diametral gegenüberliegenden Seiten zum möglichen Eingriff eines - nicht dargestellten - Maulschlüssels abgeflacht ausgebildet ist. An den zylindrischen Abschnitt 282 ist ein Gewindestift 283 angeformt, über den der Zapfen 27 in die Gewindesackbohrung 27 der kugelförmigen Anformung 21 der Spindel 2 eingeschraubt ist.

Die Spindel 2 ist in dem Kopfstück 1 mit ihrer kugelförmigen Anformung 21 zwischen dem ersten O-Ring 81 und dem zweiten O-Ring 82 schwimmend gelagert und durchdringt die langlochförmige Öffnung 16 des stirnseitigen Abschnitts 15. An der ebenen Fläche der Einbuchtung 23 der Spindel 2 liegt der Bügel 72 der Doppelschenkelfeder 7 an, dessen Schenkel 71 in die Sacklochbohrungen 17 des stirnseitigen Abschnitts 15 des Kopfstücks 1 eingebracht sind.

Die Scheibenführung 3 ist im Wesentlichen zylindrisch ausgebildet. An ihrer dem kugelförmigen Abschnitt 21 der Spindel 2 abgewandten Seite ist eine ebene Führungsfläche 31 angeordnet, die von zwei diametral gegenüberliegend angeordneten Führungsstegen 32 begrenzt ist. Die Führungsstege 32 sind an ihrer Außenseite mit zwei Führungsnasen 36 versehen, die in - nicht dargestellte - Führungsnuten auf der Innenseite des hülsenartigen Teils 11 des Kopfstücks 1 eingreifen, welche von der Nut 112 bis zum oberen Rand der Durchtrittsfenster 111 verlaufen. Durch das Eingreifen der Führungsnasen 36 in die Führungsnuten des Kopfstücks ist eine Verdrehsicherung der Scheibenführung 3 innerhalb des Kopfstücks 1 bewirkt.

An ihrer den Führungsstegen 32 gegenüberliegenden Seite ist an die Scheibenführung eine umlaufende Rastnase 33 zum Eingriff in die Rastnut 12 des Kopfstücks 1 angeformt. Mittig ist in die Scheibenführung 3 eine Spindelführung 35 in Form eines Langlochs eingebracht, dessen Längsachse parallel zu den Führungsstegen 32 verläuft und durch die der mit der Spindel 2 verbundene Zapfens 28 durchtritt. Die Länge des Langlochs der Spindelführung 35 nimmt entlang der Rotationsachse des zylindrischen Grundkörpers in Richtung der Führungsfläche 31 zu; die Spindelführung 35 ist folglich im Wesentlichen kegelförmig ausgebildet.

An ihrem der Führungsfläche 31 abgewandten Ende ist die Spindelführung 35 mit einer Kugelaufnahme 37 versehen. Die Kugelaufnahme 37 ist als Senkbohrung ausgeführt, deren Durchmesser größer als die Länge des Langloches auf der dem kegelförmigen Abschnitt 21 der Spindel 2 zugewandten Seite ist. Der Rand dieser Senkbohrung ist in Form einer angehäuften Fase 38 ausgebildet. Die dadurch ausgebildete ringförmige Fläche 34 zwischen der Fase 38 der Kugelaufnahme 37 und der Außenkante der Scheibenführung 3 bildet gemeinsam mit dem Halterin 8 eine Aufnahme für den zweiten O-Ring 92.

Zwischen den Führungsstegen 32 der Scheibenführung 3 ist an der Führungsfläche 31 anliegend die Steuerscheibe 4 angeordnet. Diese weist eine im Wesentlichen elliptische Außenkontur auf, die an ihren Längsenden orthogonal zur Längsmittelachse gekürzt ist, wodurch zwei zueinander parallele Seitenflächen 42 gebildet sind. Der Abstand der Seitenflächen 42 zueinander entspricht der lichten Weite der Führungsstege 32 der Scheibenführung 3. In die Steuerscheibe 4 ist mittig eine Sacklochbohrung 41 eingebracht, deren Durchmesser etwas größer ist, als der Durchmesser des kugelabschnittförmigen Endes des Mitnehmerabschnitts 281 des Zapfens 28 der Spindel 2. In montiertem Zustand greift der Mitnehmerabschnitt 281 in die Sacklochbohrung 41 ein. Auf ihrer der Sacklochbohrung 41 gegenüberliegenden Seite der Steuerscheibe 4 ist eine Vertiefung 43 eingebracht, die im Wesentlichen eine der Außenkontur der Steuerscheibe 4 entsprechende Form aufweist.

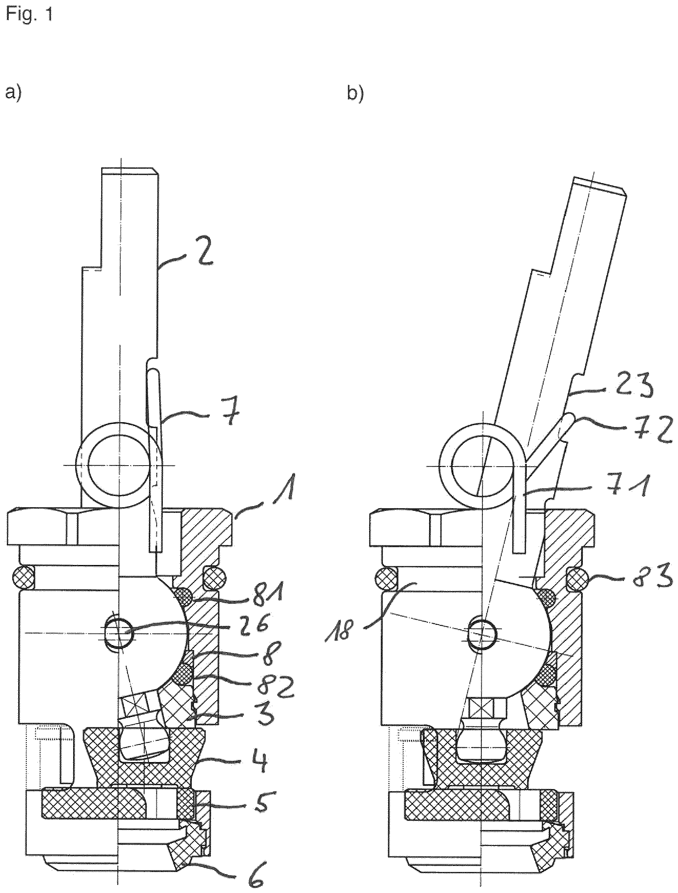

Die Durchlassscheibe 5 ist im Wesentlichen als kreisrunde Scheibe ausgebildet. Sie weist auf ihrem Umfang zwei sich diametral gegenüberliegende Führungsnasen 51 auf, die in die Führungsnuten 113 des hülsenförmigen Teils 11 des Kopfstücks 1 eingreifen. Die Durchlassscheibe 5 ist damit drehfest in dem Kopfstück 1 gehalten. In der Durchlassscheibe 5 ist eine Durchtrittsöffnung 52 eingebracht, die eine angenähert sichelförmige Kontur aufweist und deren Spiegelsymmetrieachse auf der Orthogonalen zur Verbindungsachse der Führungsnasen 51 liegt. Wird die Spindel 2 mit dem an dieser befestigten Zapfen 28 innerhalb der Spindelführung 35 geschwenkt, so wird die Steuerscheibe 4 radial auf der Durchlassscheibe 5 bewegt, wodurch die Durchtrittsöffnung 52 der Durchlassscheibe 5 freigegeben bzw. verschlossen wird. Dabei wird die Spindel 2 durch die Doppelschenkelfeder 7 nach der Betätigung in die senkrechte Position zurück verbracht (vgl. Fig. 1). Durch die winklige Anstellung des Zapfens 28 an den kugelförmigen Abschnitt 21 der Spindel 1 befindet sich die Steuerscheibe in dieser Position über der Durchtrittsöffnung 52 der Durchlassscheibe 5, wodurch diese verschlossen ist.

## Patentansprüche

1. Ventiloberteil mit einem Kopfstück (1), in dem eine Spindel (2) angeordnet ist, die auf einer Scheibenführung (3) aufliegt und über einen Zapfen (28) mit einer in der Scheibenführung (3) geführten Steuerscheibe (4) im Eingriff steht, die mit einer drehfesten Durchlassscheibe (5) in Berührung steht, die mindestens eine Durchtrittsöffnung (52) aufweist, wobei die Spindel (2) einen kugelförmigen Abschnitt (23) aufweist, an dem der Zapfen (28) angeordnet ist, wobei die Spindel (2) über wenigstens ein Federelement in Schließrichtung der Steuerscheibe (4) vorgespannt ist, **dadurch gekennzeichnet, dass** die Spindel (2) mit ihrem kugelförmigen Abschnitt (23) zwischen zwei beabstandet zueinander angeordneten, bevorzugt als O-Ring ausgebildeten Dichtungsringen schwimmend gelagert ist.

2. Ventiloberteil nach Anspruch 1, **dadurch gekennzeichnet, dass** das wenigstens eine Federelement eine Schenkelfeder, bevorzugt eine Doppelschenkelfeder (7) umfasst.

3. Ventiloberteil nach Anspruch 2, **dadurch gekennzeichnet, dass** eine Doppelschenkelfeder angeordnet ist, wobei an der Spindel (2) eine eine ebene Fläche aufweisende Einbuchtung angeordnet ist, an welcher Fläche der Bügel der Doppelschenkelfeder anliegt.

4. Ventiloberteil nach einem der vorgenannten Ansprüche, **dadurch gekennzeichnet, dass** in die Spindel (2) in Höhe des der Spindel (2) zugewandten Endes des Kopfstücks (1) eine keilförmige, eine in Richtung des freien Endes der Spindel (2) in Richtung deren Mittelachse geneigte ebene Fläche aufweisende Ausnehmung eingebracht ist.

5. Ventiloberteil nach einem der vorgenannten Ansprüche, **dadurch gekennzeichnet, dass** die durch die Schwenkachse des kugelförmigen Abschnitts der Spindel (2) verlaufende Mittelachse des Zapfens um einen spitzen Winkel geneigt zur Mittelachse der Spindel (2) angeordnet ist.

6. Ventiloberteil nach Anspruch 5, **dadurch gekennzeichnet, dass** der spitze Winkel derart gewählt ist, dass die Spindel (2) in Schließposition der Steuerscheibe orthogonal zu dieser angestellt ist.

7. Ventiloberteil nach einem der vorgenannten Ansprüche, **dadurch gekennzeichnet, dass** beabstandet zu der Scheibenführung (3) an einem innerhalb des Kopfstücks 1 angeordneten Absatz anliegend ein Stützring angeordnet ist, der zusammen mit der Scheibenführung (3) einen Sitz für einen der Dichtungsringe ausbildet.

8. Ventiloberteil nach einem der vorgenannten Ansprüche, **dadurch gekennzeichnet, dass** die Scheibenführung Rastnasen aufweist, über die sie innerhalb des Kopfstücks (1) mit diesem verrastet ist.

9. Ventiloberteil nach einem der vorgenannten Ansprüche, **dadurch gekennzeichnet, dass** durch die Schwenkachse des kugelförmigen Abschnitts der Spindel (2) eine Achse geführt ist, die derart innerhalb des Kopfstücks in zwei gegenüberliegend angeordneten Vertiefungen gelagert ist, dass eine Rotation des kugelförmigen Abschnitts um die Mittelachse der Spindel verhindert ist.

10. Ventiloberteil nach Anspruch 9, **dadurch gekennzeichnet, dass** das die Vertiefungen jeweils durch eine vertikal verlaufende Nut gebildet ist.

11. Ventiloberteil nach einem der vorgenannten Ansprüche, **dadurch gekennzeichnet, dass** das Kopfstück (1) an seiner der Spindel (2) zugewandten Stirnseite ein Langloch aufweist, durch das die durch dieses hindurch tretende Spindel (2) in Schwenkrichtung geführt ist.

12. Ventiloberteil nach einem der vorgenannten Ansprüche, **dadurch gekennzeichnet, dass** das Kopfstück und/oder die Spindel aus einer Messing-Silizium-Legierung hergestellt sind.

## Claims

1. Valve bonnet having a head piece (1), in which a spindle (2) is arranged, which rests on a disc guide (3) and engages via a pin (28) with a control disc (4) guided in the disc guide (3), which is in contact with a fixed passage disc (5), which has at least one passage opening (52), wherein the spindle (2) has a spherical section (23), on which the pin (28) is arranged, wherein the spindle (2) is prestressed via at least one spring element in the closing direction of the control disc (4), **characterised in that** the spindle (2) with its spherical section (23) is floatingly mounted between two sealing rings arranged at a distance from one another, preferably designed as an O-ring.

2. Valve bonnet according to claim 1, **characterised in that** the at least one spring element comprises a leg spring, preferably a double leg spring (7).

3. Valve bonnet according to claim 2, **characterised in that** a double leg spring is arranged, wherein an indentation with a flat surface is arranged at the spindle (2), against which surface the bow of the double leg spring rests.

4. Valve bonnet according to one of the previous claims, **characterised in that** a wedge-shaped recess with a flat surface inclined in the direction of the free end of the spindle (2) in the direction of its central axis is inserted in the spindle (2) at the height of the end of the head piece (1) facing the spindle (2).

5. Valve bonnet according to one of the previous claims, **characterised in that** the central axis of the pin running through the pivot axis of the spherical section of the spindle (2) is inclined at an acute angle relative to the central axis of the spindle (2).

6. Valve bonnet according to claim 5, **characterised in that** the acute angle is selected in such a manner that the spindle (2) in a closing position of the control disc is positioned orthogonally to it.

7. Valve bonnet according to one of the previous claims, **characterised in that**, at a distance from the disc guide (3), a support ring is arranged resting against a shoulder arranged within the head piece 1, which, together with the disc guide (3), forms a seat for one of the sealing rings.

8. Valve bonnet according to one of the previous claims, **characterised in that** the disc guide has latching lugs, via which it is latched inside the head piece (1) with said head piece.

9. Valve bonnet according to one of the previous claims, **characterised in that** an axis is guided through the pivot axis of the spherical section of the spindle (2), which is mounted inside the head piece in two oppositely arranged recesses in such a manner that a rotation of the spherical section about the central axis of the spindle is prevented.

10. Valve bonnet according to claim 9, **characterised in that** the recesses are each formed by a vertically running groove.

11. Valve bonnet according to one of the previous claims, **characterised in that** the head piece (1) has a long hole at its end face facing the spindle (2), by which the spindle (2) passing through said long hole is guided in the pivoting direction.

12. Valve bonnet according to one of the previous claims, **characterised in that** the head piece and/or the spindle are made of a brass-silicon-alloy.

## Revendications

1. Partie supérieure de soupape avec une pièce têtière (1) dans laquelle est disposée une broche (2) qui applique sur un guidage (3) à disque et qui engrène via un picot (28) avec un disque de commande (4) guidé dans le guidage (3) à disque, disque qui touche un disque de passage (5) ne tournant pas et présentant au moins un orifice de passage (52), sachant que la broche (2) présente un segment (23) en forme de bille contre lequel est disposé le picot (28), sachant que la broche (2) est précontrainte via au moins un élément ressort dans le sens de fermeture du disque de commande (4), **caractérisée en ce que** la broche (2) avec son segment (23) en forme de bille est en appui flottant entre deux bagues d'étanchéité configurées de préférence en joints toriques et disposées à distance l'une de l'autre.

2. Partie supérieure de soupape selon la revendication 1, **caractérisée en ce qu'**au moin un élément ressort comprend un ressort à branche, de préférence un ressort à deux branches (7).

3. Partie supérieure de soupape selon la revendication 2, **caractérisée en ce qu'**est disposé un ressort à deux branches, sachant que contre la broche (2) est disposé un creux présentant une surface plane contre laquelle applique l'étrier du ressort à deux branches.

4. Partie supérieure de soupape selon l'une des revendications précédentes, **caractérisée en ce que** dans la broche (2), à hauteur de l'extrémité de la pièce têtière (1) regardant la broche (2), a été ménagé un évidement cunéiforme pointant en direction de l'extrémité libre de la broche (2) et présentant une surface plane inclinée en direction de son axe médian.

5. Partie supérieure de soupape selon l'une des revendications précédentes, **caractérisée en ce que** l'axe médian du picot, traversant l'axe de pivotement du segment en forme de bille de la broche (2), est disposé incliné selon un angle aigu par rapport à l'axe médian de la broche (2).

6. Partie supérieure de soupape selon la revendication 5, **caractérisée en ce que** l'angle aigu est choisi de telle sorte que la broche (2), lorsque le disque de commande est en position de fermeture, soit en applique perpendiculairement à celui-ci.

7. Partie supérieure de soupape selon l'une des revendications précédentes, **caractérisée en ce qu'**à distance du guidage (3) à disque, en applique contre un épaulement disposé à l'intérieur de la pièce têtière (1), est disposée une bague d'appui qui avec le guidage (3) à disque configure un siège pour l'une des bagues d'étanchéité.

8. Partie supérieure de soupape selon l'une des revendications précédentes, **caractérisée en ce que** le guidage à disque présente des saillies de crantage via lesquelles elle encrante, à l'intérieur de la pièce têtière (1), avec cette dernière.

9. Partie supérieure de soupape selon l'une des revendications précédentes, **caractérisée en ce qu'**à travers l'axe de pivotement du segment en forme de bille de la broche (2) est guidé un axe en appui à l'intérieur de la pièce têtière, dans deux creux disposés se faisant face, de sorte à empêcher une rotation du segment en forme de bille autour de l'axe médian de la broche.

10. Partie supérieure de soupape selon la revendication 9, **caractérisée en ce que** les creux sont respectivement formés par une rainure au tracé vertical.

11. Partie supérieure de soupape selon l'une des revendications précédentes, **caractérisée en ce que** la pièce têtière (1) présente, sur son côté frontal regardant la broche (2), un trou oblong à travers lequel est guidée dans le sens de pivotement la broche (2) sortant par ledit trou.

12. Partie supérieure de soupape selon l'une des revendications précédentes, **caractérisée en ce que** la pièce têtière et/ou la broche sont fabriquées en un alliage de laiton et de silicium.
